(19) Europäisches Patentamt
European Patent Office
Office européen des brevets

(11) **EP 0 833 238 B1**

(12) **EUROPEAN PATENT SPECIFICATION**

(45) Date of publication and mention
of the grant of the patent:
**06.08.2003 Bulletin 2003/32**

(51) Int Cl.[7]: **G05D 3/12**, B25J 9/16

(86) International application number:
**PCT/JP97/00421**

(21) Application number: **97902711.7**

(22) Date of filing: **17.02.1997**

(87) International publication number:
**WO 97/031303 (28.08.1997 Gazette 1997/37)**

(54) **CONTROLLER OF MULTI-AXIS ROBOT**

STEUEREINRICHTUNG FÜR EINEN MEHRACHSIGEN ROBOTER

ORGANE DE COMMANDE D'UN ROBOT MULTIAXIAL

(84) Designated Contracting States:
**DE GB SE**

(30) Priority: **20.02.1996 JP 3223096**

(43) Date of publication of application:
**01.04.1998 Bulletin 1998/14**

(73) Proprietor: **KABUSHIKI KAISHA YASKAWA
DENKI
Kitakyushu-Shi Fukuoka 806 (JP)**

(72) Inventors:
• **UMEDA, Nobuhiro,
Kabushiki Kaisha Yaskawa Denki
Kitakyushu-shi, Fukuoka 806 (JP)**
• **OGURO, Ryuichi,
Kabushiki Kaisha Yaskawa Denki
Kitakyushu-shi, Fukuoka 806 (JP)**

• **OJIMA, Masao,
Kabushiki Kaisha Yaskawa Denki
Kitakyushu-shi, Fukuoka 806 (JP)**

(74) Representative: **Goddar, Heinz J., Dr. et al
FORRESTER & BOEHMERT
Pettenkoferstrasse 20-22
80336 München (DE)**

(56) References cited:

| | |
|---|---|
| JP-A- 1 136 216 | JP-A- 1 163 808 |
| JP-A- 3 250 307 | JP-A- 3 257 602 |
| JP-A- 5 077 176 | JP-A- 5 313 752 |
| JP-A- 6 246 652 | JP-A- 7 129 210 |
| US-A- 4 925 312 | US-A- 4 943 759 |
| US-A- 4 989 161 | US-A- 5 101 472 |

EP 0 833 238 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Technical Field

The present invention relates to a multi-axis robot represented by an industrial robot having a dynamic interaction between mutual control axes and including a spring element in each axis, and particularly to a controller thereof for entirely removing the interaction force produced at the top end of an arm.

Background Art

In general, in an industrial robot where each axis is driven by a motor, in order to ideally reduce the influences of the lack of power of the motor or the disturbance from the load side, an arm at the load side is driven through a gear such as a harmonic drive having a high reduction ratio. Consequently a dynamic interaction between the control axes does not become a problem in the prior art.

However, as demand increases for higher speed and accuracy dynamic influences which cannot be compensated for by the PI control, and disturbances which cannot be neglected even with the high reduction ratio are produced.

In order to solve these problems, a method of compensating for the disturbance by use of a disturbance estimation observer and a method of previously compensating for the disturbance based on a dynamic equation in a similar manner to a robot of a direct drive system have been reported (e.g., Japanese Patent Laid-Open No. 63-314606, Japanese Patent Laid-Open No. 6-270079, and Japanese Patent Laid-Open No. 7-7307).

When the disturbance produced at the load side is large, with the disturbance compensation observer method, the sufficient improvement in accuracy cannot be expected since the dynamic property regarding the interaction or the like is not considered. Also, regarding the method of previously compensating for the disturbance based on the dynamic equation, in the conventional method, the dynamic property involving interposing a gear or the interaction force including the control input calculated to operate each axis is not sufficiently considered, so that the interaction cannot be completely removed during high speed operation.

US 4,989,161 A discloses a controller for a multi-axis robot comprising at least a first and a second assembly, each assembly having an arm, a servomotor driven by a control input with a control unit and a coupling in the form of a decelerator between said servomotor and said arm, which includes a spring element, means for detecting a torsional angle of the coupling, dynamic coupling calculation means for calculating coupling parameters of the coupling of said servomotor and said arm in each axis assembly, including a closed loop for effecting motor control and correction means for adding correction torque to said control input of said servomotor.

The problem to be solved by the invention is to obviate interactions between mutual axes even during high speed operation, when an industrial robot including a spring element such as a decelerator in each axis is used

This problem is solved by a controller for a multi-axis robot as defined in claim 1.

In the controller, as to the torsional angle produced in the decelerator of each axis, a value reproduced by a state observation means reproducing the state quantity through a control input of a servomotor of each axis and an actual position of the servomotor may be used.

More specifically, the coupling of the servomotor and the arm in each axis is expressed by two inertial systems including a spring element, whereby a dynamic equation is determined to calculate an interaction force from multi-axiss generated on the arm side in each axis and an interaction force included with a control input of each axis constituted in a semiclosed loop is calculated, and such correction torque as to completely cancel the interaction force, added to the control input to be outputted.

According to the present invention, even in a multi-axis robot having a mechanism including a spring element such as a decelerator between a servomotor and an arm, an interaction force generated on the arm side of each axis from another axis and an interaction force included in a control input of a servomotor constituted in a semiclosed loop independent in each axis are calculated and interaction torque produced in each axis is corrected. Thus, even with high speed operation which produces torsional vibration in the decelerator the interaction force can be removed, and a servomotor of each axis can be controlled as if no interaction were produced between the drive axes.

Brief Description of Drawings

Fig. 1 is a diagrammatic view of a general vertical two-axis robot;
Fig. 2 is a diagrammatic view of a vertical two-axis robot of parallelogram link structure;
Fig. 3 is an explanation diagram showing each coefficient of an equation of motion;
Fig. 4 is an explanation diagram of a torque transmission mechanism between a motor and an arm;

Fig. 5 is a block diagram showing a configuration of a control system of a controller of the invention regarding two axes;

Fig. 6 is a characteristic diagram of a zero command given to a first axis and a speed command of step type given to a second axis;

Fig. 7 is an explanation diagram of an interaction force produced in the first axis in the ordinary PI control;

Fig. 8 is an explanation diagram showing the state that the interaction force is removed in the invention;

Fig. 9 is an explanation diagram showing a shift of a locus produced in the ordinary PI control; and

Fig. 10 is an explanation diagram showing a shift of a locus improved in the invention.

Best Mode for Carrying out the Invention

A two-axis robot will be described to simplify the explanation. In a multi-axis robot, items explained as follows regarding the two-axis robot can be extended and applied.

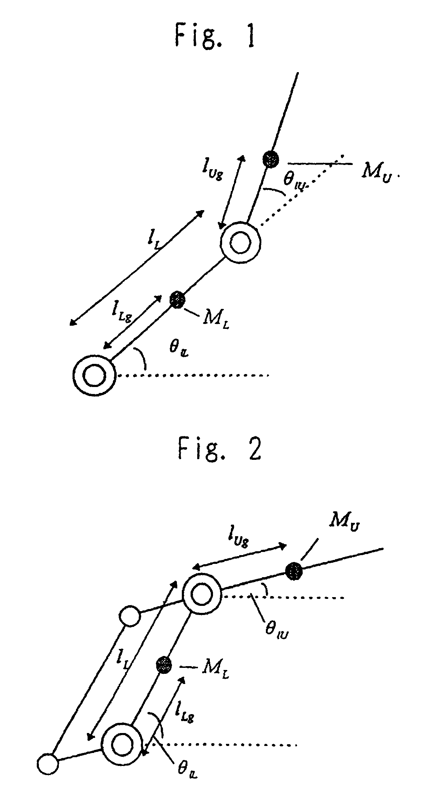

Fig. 1 is a diagrammatic view of a general vertical two-axis robot having an L-axis and U-axis, and Fig. 2 is a diagrammatic view of a vertical two-axis robot of parallelogram link structure. In the figures, $l_L$ is the length of the L-axis, $M_L$ is the mass of the L-axis, $l_{Lg}$ is the length of the L-axis to the center of gravity, $\theta_{IL}$ is the angle of the L-axis, $M_U$ is the mass of the U-axis, $l_{Ug}$ is the length of the U-axis to the center of gravity, and $\theta_{IU}$ is the angle of the U-axis with respect to the L-axis. An equation of motion of the two-axis robot shown in Fig. 1 and Fig. 2 can be expressed by the following formulas 1 ~ 6. First, an expression of relation representing a torsional angle produced in a decelerator of each axis is expressed in the following formulas.

$$\theta_{SL} = \frac{1}{N_L}\,\theta_{mL} - \theta_{IL} \qquad\qquad \text{(Formula 1)}$$

$$\theta_{SU} = \frac{1}{N_U}\,\theta_{mU} - \theta_{IU} \qquad\qquad \text{(Formula 2)}$$

Where $\theta_{mL}$ is the angle of an L-axis motor, $\theta_{mU}$ is the angle of a U-axis motor, $N_L$ is the reduction ratio of an L-axis decelerator, $N_U$ is the reduction ratio of a U-axis decelerator, $\theta_{SL}$ is the torsional angle produced in the L-axis decelerator, and $\theta_{SU}$ is the torsional angle produced in the U-axis decelerator.

Next formula 3 and formula 4 are expressions of relation determined from Lagrange's equation of motion.

$$K_{CL}\theta_{SL}=M_{LL}\theta_{IL}+M_{LU}\theta_{IU}+d_L \qquad\qquad \text{(Formula 3)}$$

$$K_{CU}\theta_{SU}=M_{UL}\theta_{IL}+M_{UU}\theta_{IU}+d_U \qquad\qquad \text{(Formula 4)}$$

Here, $K_{CL}$ is the spring constant of the L-axis decelerator, $K_{CU}$ is the spring constant of the U-axis decelerator, $d_L$ is the torque disturbance acting on the L-axis, and $d_U$ is the torque disturbance acting on the U-axis.

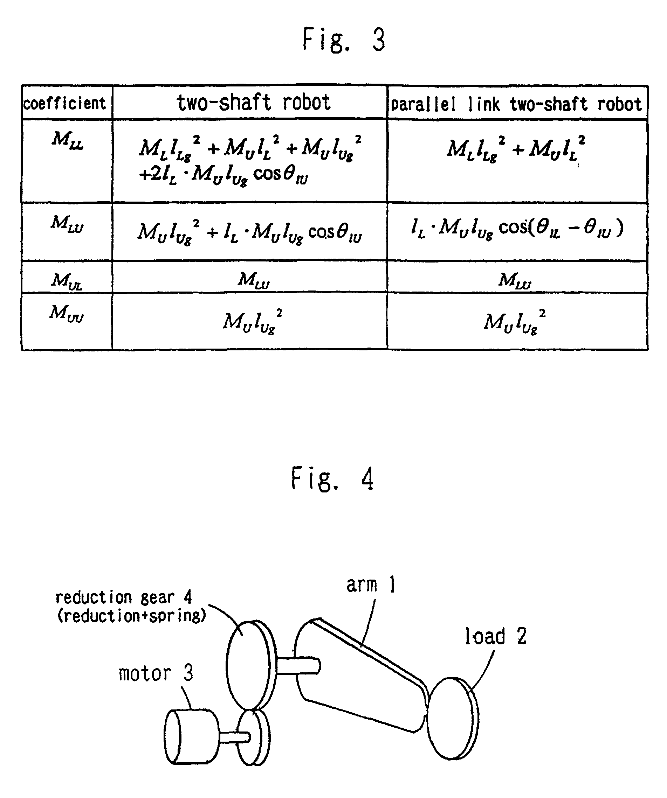

Fig. 3 shows each coefficient of the equation of motion.

Furthermore, a torque transmission mechanism between a motor and an arm shown in Fig. 4 can be expressed by the following formulas. In Fig. 4, numeral 1 designates an arm, numeral 2 designates a load, numeral 3 designates a motor to drive the arm 1, and numeral 4 designates a decelerator installed between the motor 3 and the arm 1. The decelerator 4 is constituted by a reduction mechanism and a spring element

$$\theta_{mL} = -\frac{K_{CL}}{J_{mL}N_L}\,\theta_{SL} - u_{Lref} \qquad\qquad \text{(Formula 5)}$$

$$\theta_{mU} = -\frac{K_{CL}}{J_{mL}N_L}\,\theta_{SU} - u_{Uref} \qquad\qquad \text{(Formula 6)}$$

Here, $J_{mL}$ is the moment of inertia of the L-axis motor, $J_{mU}$ is the moment of inertia of the U-axis motor, $u_{Lref}$

is the control input of the L-axis, and $u_{Uref}$ is the control input of the U-axis. The control input here is represented as an acceleration command.

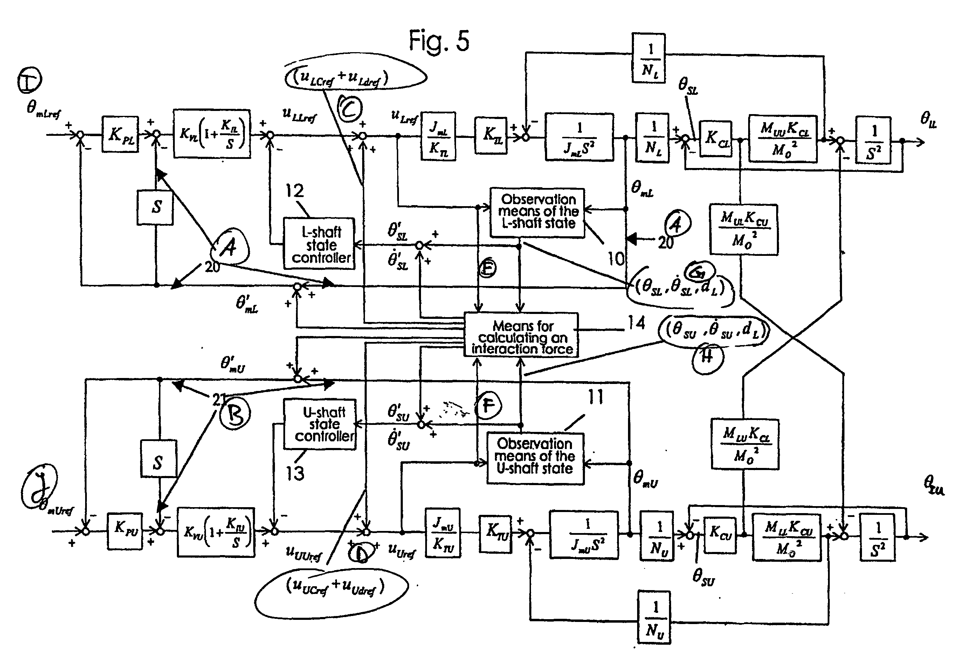

Fig. 5 is a block a diagram of a configuration of a control system by a controller of the present invention shown regarding two axes. In Fig. 5, numeral 10 designates an observation means of the L-axis state, numeral 11 designates an observation means of the U-axis state, numeral 12 designates a controller of the L-axis state, numeral 13 designates a U-axis state controller and numeral 14 designates a means for calculating an interaction force. Reference numeral 20 denotes a semi-closed loop path for controlling the L-axis and reference numeral 21 denotes a semi-closed loop path for controlling the U-axis.

Solution of the formulas 1 ~ 6 regarding differentiation in the fourth order of the position $\theta_{IL}$, $\theta_{IU}$ of the arm 1 can be expressed as the following formulas.

$$\theta_{IL}^{(4)} = -(1 + K_{JL})\,\omega_{LL}^2\theta_{IL} + \frac{1}{N_L}\,\omega_{LL}^2 u_{Lref} - K_{JL}\omega_{LL}^2\omega_{LU}^2\theta_{SU}$$

$$- K_{JL}\omega_{LL}^2 d_{LL} - d_{LL} - \omega_{LU}^2\theta_{SU} \qquad \text{(Formula 7)}$$

$$\theta_{IU}^{(4)} = -(1 + K_{JU})\,\omega_{UU}^2\theta_{IU} + \frac{1}{N_U}\,\omega_{UU}^2 u_{Uref} - K_{JU}\omega_{UU}^2\omega_{UL}^2\theta_{SL}$$

$$- K_{JU}\omega_{UU}^2 d_{UU} - d_{UU} - \omega_{UL}^2\theta_{SL} \qquad \text{(Formula 8)}$$

where $\theta_{IL}^{(4)}$ and $\theta_{IU}^{(4)}$ are differentiation of the fourth order of $\theta_{IL}$ and $\theta_{IU}$ respectively.

$$K_{JL} = \frac{1}{J_{mL}N_L^2}\frac{M_{LL}M_{UU} - M_{LU}M_{UL}}{M_{UU}}$$

$$K_{JU} = \frac{1}{J_{mU}N_U^2}\frac{M_{LL}M_{UU} - M_{LU}M_{UL}}{M_{LL}}$$

$$\omega_{LL}^2 = K_{CL}\frac{M_{UU}}{M_{LL}M_{UU} - M_{LU}M_{UL}}$$

$$\omega_{UU}^2 = K_{CU}\frac{M_{LL}}{M_{LL}M_{UU} - M_{LU}M_{UL}}$$

$$\omega_{LU}^2 = K_{CU}\frac{M_{LU}}{M_{LL}M_{UU} - M_{LU}M_{UL}}$$

$$\omega_{UL}^2 = K_{CL}\frac{M_{UL}}{M_{LL}M_{UU} - M_{LU}M_{UL}}$$

$$d_{LL} = \frac{M_{UU}}{M_{LL}M_{UU} - M_{LU}M_{UL}}\,d_L - \frac{M_{LU}}{M_{LL}M_{UU} - M_{LU}M_{UL}}\,d_U$$

$$d_{UU} = \frac{M_{UL}}{M_{LL}M_{UU} - M_{LU}M_{UL}}\,d_L + \frac{M_{LL}}{M_{LL}M_{UU} - M_{LU}M_{UL}}\,d_U$$

In Formulas 7 and 8, the differentiation in the fourth order of the position of the arm includes the state quantity of other axis and the disturbance term in addition to the state quantity of the self axis and the control input.

Separation of the control input into a value calculated by a command, a value due to an interaction from another axis and a value due to disturbance other than the interaction can be expressed in the following formulas.

$$u_{Lref} = u_{LLref} + u_{LCref} + u_{Ldref} \qquad \text{(Formula 9)}$$

$$u_{Uref} = u_{UUref} + u_{UCref} + u_{Udref} \qquad \text{(Formula 10)}$$

Where $u_{LLref}$ and $u_{UUref}$ are control inputs necessary for operation of each axis, $u_{LCref}$ and $u_{UCref}$ are control inputs to compensate the interaction force from other axis, and $u_{Ldref}$ and $u_{Udref}$ are control inputs to compensate the disturbance included in the control input.

Here the condition of noninteraction among axes can be explained in the following formulas.

$$\theta_{IL}{}^{(4)} = -(1 + K_{JL})\omega_{LL}{}^2\theta_{IL} + \frac{1}{N_L}\,\omega_{LL}{}^2 u_{LLref} \qquad \text{(Formula 11)}$$

$$\theta_{IU}{}^{(4)} = -(1 + K_{JU})\omega_{UU}{}^2\theta_{IU} + \frac{1}{N_U}\,\omega_{UU}{}^2 u_{UUref} \qquad \text{(Formula 12)}$$

Consequently the following formulas must be effected.

$$u_{LCref} + u_{Ldref} = K_{JL}N_L\omega_{LU}{}^2\theta_{SU} + N_L\,\frac{\omega_{LU}{}^2}{\omega_{LL}{}^2}\,\theta_{SU}$$

$$+ K_{JL}N_L d_{LL} + N_L\,\frac{1}{\omega_{LL}{}^2}\,d_{LL} \qquad \text{(Formula 13)}$$

$$u_{UCref} + u_{Udref} = K_{JU}N_U\omega_{UL}{}^2\theta_{SL} + N_U\,\frac{\omega_{UL}{}^2}{\omega_{UU}{}^2}\,\theta_{SL}$$

$$+ K_{JU}N_U d_{UL} + N_U\,\frac{1}{\omega_{UU}{}^2}\,d_{UU} \qquad \text{(Formula 14)}$$

The condition of removing the interaction force for the operation of the self axis is that the control input is compensated so that Formulas 11 and 12 are effected. That is, the formulas 13 and 14 must be effected.

Here, in order to compensate for the interaction force included in the control input calculated to further operate each axis, the following formulas determined by Formulas 1 ∼ 6 will be introduced.

$$\theta_{SL} = -(1 + K_{JL})\omega_{LL}{}^2\theta_{SL} + \frac{1}{N_L}u_{Lref} + \omega_{LU}{}^2\theta_{SU} + d_{LL} \qquad \text{(Formula 15)}$$

$$\theta_{SU} = -(1 + K_{JU})\omega_{UU}{}^2\theta_{SU} + \frac{1}{N_U}\,u_{Uref} + \omega_{UL}{}^2\theta_{SL} + d_{UU} \qquad \text{(Formula 16)}$$

Formulas 15 and 16 are substituted for Formulas 13 and 14, whereby the following formulas can be obtained as the compensation quantity of noninteraction.

$$u_{LCref} = \frac{\omega_{UU}^2}{\omega_{LL}^2 \omega_{UU}^2 - \omega_{LU}^2 \omega_{UL}^2}\left(\omega_{LL}^2 D_L + \frac{N_L}{N_U}\omega_{LU}^2 D_U\right) \ldots\ldots \text{(Formula 17)}$$

$$u_{UCref} = \frac{\omega_{LL}^2}{\omega_{LL}^2 \omega_{UU}^2 - \omega_{LU}^2 \omega_{UL}^2}\left(\omega_{UU}^2 D_U + \frac{N_U}{N_L}\omega_{UL}^2 D_L\right) \ldots\ldots \text{(Formula 18)}$$

where

$$D_L = N_L \frac{\omega_{LU}^2}{\omega_{LL}^2}\left[\frac{1}{N_U}u_{UUref} + \omega_{UL}^2\theta_{SL} + \left\{K_{JL}\omega_{LL}^2 - (1+K_{JU})\omega_{UU}^2\right\}\theta_{SU}\right]$$
$$- u_{Ldref} + \frac{N_L}{N_U}\frac{\omega_{LU}^2}{\omega_{LL}^2}u_{Udref} + K_{JL}N_L d_{LL} + N_L \frac{\omega_{LU}^2}{\omega_{LL}^2}d_{UU} + N_L \frac{1}{\omega_{LL}^2}d_{LL}$$

$$D_U = N_U \frac{\omega_{UL}^2}{\omega_{UU}^2}\left[\frac{1}{N_L}u_{LLref} + \omega_{LU}^2\theta_{SU} + \left\{K_{JU}\omega_{UU}^2 - (1+K_{JL})\omega_{LL}^2\right\}\theta_{SL}\right]$$
$$- u_{dref} + \frac{N_U}{N_L}\frac{\omega_{UL}^2}{\omega_{UU}^2}u_{Ldref} + K_{JU}N_U d_{UU} + N_U \frac{\omega_{UL}^2}{\omega_{UU}^2}d_{LL} + N_U \frac{1}{\omega_{UU}^2}d_{UU}$$

Since the compensation quality includes the torsion amount in the decelerator, the following correction amount is added to the state variable used in the control operation.

$$\theta'_{mL} = \theta_{mL} - N_L \frac{\omega_{LU}^2}{\omega_{LL}^2}\theta_{SU} \qquad\qquad \text{(Formula 19)}$$

$$\theta'_{mU} = \theta_{mU} - N_U \frac{\omega_{UL}^2}{\omega_{UU}^2}\theta_{SL} \qquad\qquad \text{(Formula 20)}$$

$$\theta'_{SL} = \theta_{SL} - \frac{\omega_{LU}^2}{\omega_{LL}^2}\theta_{SU} \qquad\qquad \text{(Formula 21)}$$

$$\theta'_{SU} = \theta_{SU} - \frac{\omega_{UL}^2}{\omega_{UU}^2}\theta_{SL} \qquad\qquad \text{(Formula 22)}$$

According to the controller as above described, the interaction force produced by the operation of the top end of the arm of each axis and the interaction force included in the control input of each axis are subjected to noninteraction, and a response without an interaction can be obtained regarding the operation of the top end of the arm.

When the disturbance can be neglected or cannot be observed, the disturbance term in Formulas 1 ~ 22 may be omitted for the application.

Effects of the embodiments of the present invention will be described as follows.

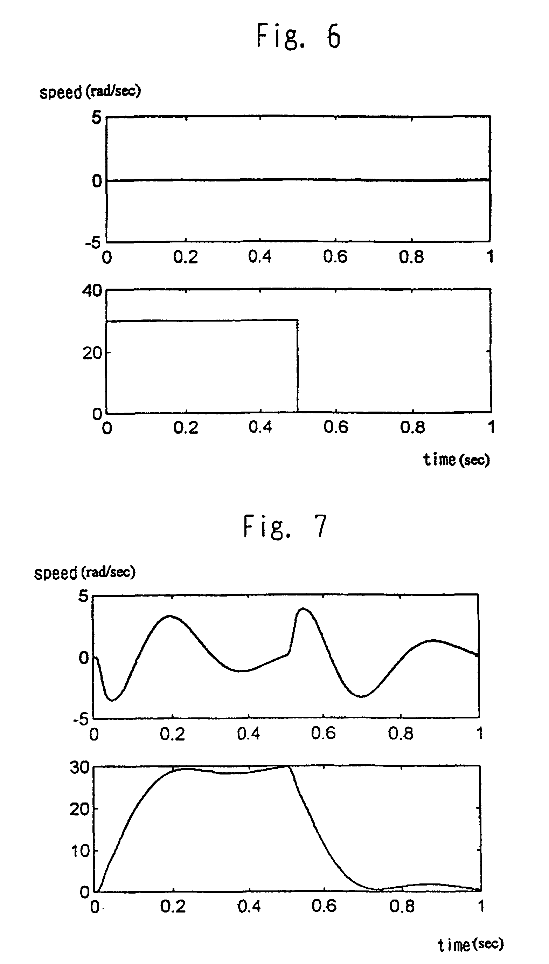

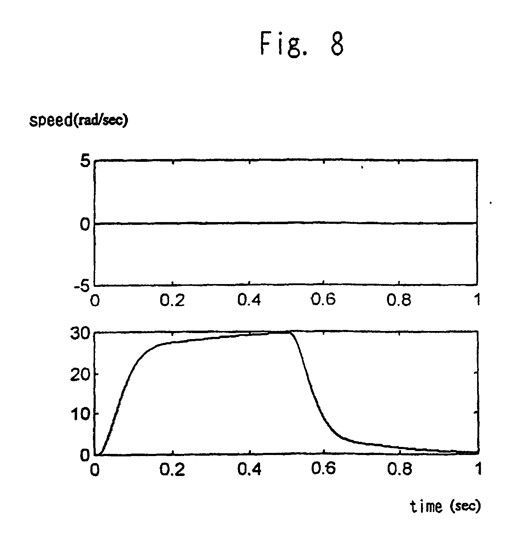

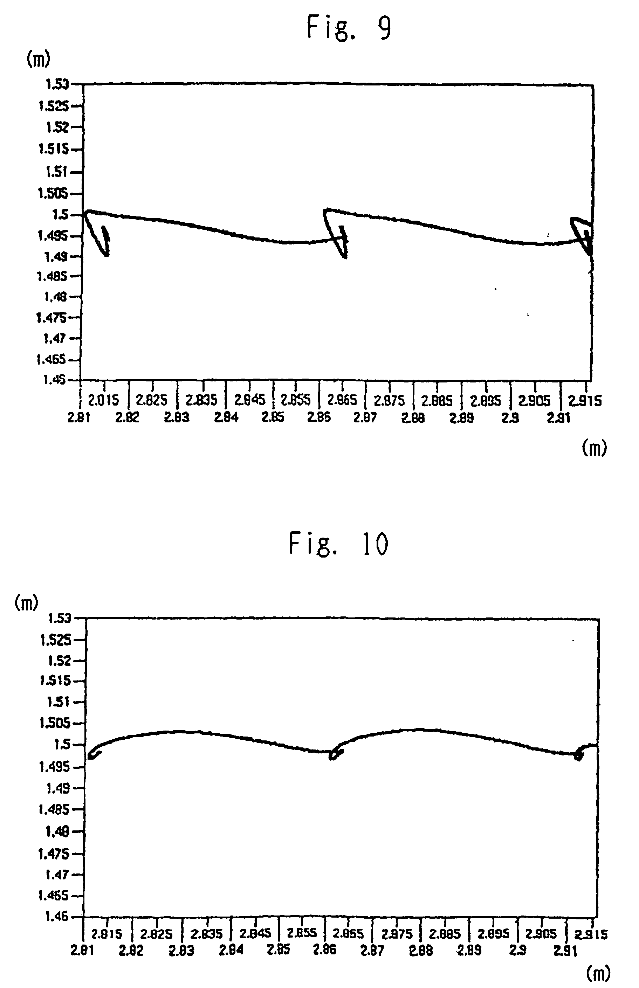

As shown in Fig. 6, when the first axis is supplied with a zero command (upper characteristics in Fig. 6) and the second axis is supplied with a speed step type command (lower characteristics in Fig. 6), in the ordinary PI control, an interaction force as shown in Fig. 7 is produced in the first axis, but using a controller of the present invention, the interaction force can be removed as shown in Fig. 8. Also when a command is issued to draw a linear locus in the horizontal direction at the top end, in the ordinary PI control, a shift is considerably produced in the locus as shown in Fig. 9, but using a controller in the present invention, the improvement can be made as shown in Fig. 10.

Industrial Applicability

The present invention can be utilized in the field of control of an industrial robot including a spring element such as a decelerator in each axis.

**Claims**

1. A controller for a multi-axis robot having at least first and second axis assemblies, said first and second axis assemblies each having an arm (1), a servomotor (3) driven by a control input and a coupling (4) in the form of a decelerator, which includes a spring element, coupling said servomotor (3) and said arm (1), said second axis assembly being disposed at an end of said arm of said first axis assembly, said controller comprising:

   said first and second axis assemblies each including torsional angle detecting means for detecting a torsional angle ($\theta_{SL}$, $\theta_{SU}$) of a respective one of the couplings (4);

   dynamic coupling calculating means for calculating coupling parameters of the coupling of said servomotor and said arm in each of said first and second axis assemblies;

   said first and second axis assemblies each including a semi-closed loop (20, 21) for effecting motor control;

   **characterized by**
   an interaction calculator (14) for calculating first interaction forces and second interaction forces based on control input values ($u_{Lref}$, $u_{Uref}$) for said servomotors (3) of each of said first and second axis assemblies, and said torsional angles ($\theta_{SL}$, $\theta_{SU}$), wherein:

   said first interaction forces are forces generated on said arm of each of said first and second axis assemblies by motion of the other of said first and second axis assemblies; and
   said second interaction forces are generated by input ($u_{LCref}$, $u_{UCref}$), included in control inputs ($u_{Lref}$, $u_{Uref}$) of said servomotors (3), from a respective one of said semi-closed loops (20, 21) in each of said first and second axis assemblies due to the first interaction forces of the other of said first and second axis assemblies; and

   correction means for calculating a correction torque for each of said first and second axis assemblies, based on said first interaction forces and said second interaction forces for said first and second axis assemblies, to permit each of said arms (1) to act without being affected by said first interaction forces and said second interaction forces acting on the respective one of said first and second axis assemblies, and said correction means including input means for adding the correction torque to said control input of the respective one of said first and second axis assemblies.

2. The controller according to claim 1 wherein said torsional angle detecting means of said first and second axis assemblies detect the torsional angle ($\theta_s$) of the respective one of couplings (4) based on the control input and motor angle ($\theta_m$) of a respective one of said first and second axis assemblies.

3. The controller according to claim 2 wherein said torsional angle detecting means of each of said first and second axis assemblies is provided with a state observation means for calculating state quantities, including said torsional angles ($\theta_{SL}$, $\theta_{SU}$), of a respective one of said first and second axis assemblies.

4. The controller according to claim 1 wherein said torsional angle detecting means of said first and second axis assemblies determine the torsional angle ($\theta_{SL}$, $\theta_{SU}$) of the respective one of the couplings (4) based on an input angle and an output angle of a respective one of said decelerators in accordance with the formula

$$\theta_s = \frac{\theta_m}{N} - \theta_1$$

wherein $\theta_s$ is the torsion angle, $\theta_m$ is the input angle which is a motor angle, N is a reduction ratio of said decelerator, and $\theta_1$ is the output angle which is an arm angle.

5. The controller according to any of the above claims wherein said correction means calculates a semi-closed loop correction parameter for each of said first and second axis assemblies, based on said first interaction forces and said second interaction forces for said first and second axis assemblies, to compensate for a torsion amount included in said correction torque to permit each of said arms (1) to act without being affected by said fist interaction forces and said second interaction forces acting on the respective one of said first and second axis assemblies and adds said semi-closed loop correction parameter to a state variable of said semi-closed loop (20, 21) of each of said first and second axis assemblies.

6. The controller according to claim 5 wherein said state variable of said semi-closed loop (20, 21) of each of said first and second axis assemblies is a motor angle ($\theta_m$).

**Patentansprüche**

1. Steuervorrichtung für einen mehrachsigen Roboter, der wenigstens eine erste und eine zweite Achsenbaugruppe hat, wobei die erste und zweite Achsenbraugruppe jede einen Arm (1), einen Servomotor (3), der von einer Steuereingabe getrieben wird, und eine Kupplung (4) in der Form einer Verzögerungseinrichtung, welche ein Federelement umfaßt, das den Servomotor (3) und den Arm (1) koppelt, aufweist, wobei die zweite Achsenbaugruppe an einem Ende des Armes der ersten Achsenbaugruppe angeordnet ist, wobei die Steuervorrichtung aufweist:

die erste und zweite Achsenbaugruppe enthält jede eine Torsionswinkel-Erfassungeinrichtung zum Erfassen eines Torsionswinkels ($\theta_{SL}$, $\theta_{SU}$) einer jeweiligen der Kupplungen (4);

eine Recheneinrichtung für die dynamische Kopplung zum Berechnen von Kopplungsparametem der Kupplung des Servomotors und des Arms sowohl in der ersten als auch in der zweiten Achsenbaugruppe;

wobei die erste und die zweite Achsenanordnung jede eine halb geschlossene Schleife (20, 21) zum Bewirken der Motorsteuerung umfaßt;

**gekennzeichnet durch**
einen Wechselwirkungsrechner (14) zum Berechnen von ersten Wechselwirkungskräften und zweiten Wechselwirkungskräften, basierend auf Steuereingangswerten ($u_{Lref}$, $u_{Uref}$) für die Servomotoren (3) sowohl der ersten als auch der zweiten Achsenbaugruppe und den Torsionswinkeln ($\theta_{SL}$, $\theta_{SU}$), wobei:

die ersten Wechselwirkungskräfte Kräfte sind, die auf dem Arm jeder der ersten und zweiten Achsenbaugruppe **durch** Bewegung der anderen der ersten und zweiten Achsenbaugruppe erzeugt werden; und
die zweiten Wechselwirkungskräfte **durch** Eingaben ($u_{LCref}$, $u_{UCref}$), welche in den Steuereingaben ($u_{Lref}$, $u_{Uref}$) der Servomotoren (3) enthalten sind, von einer jeweiligen der halbgeschlossenen Schleifen (20, 21) in jeder der ersten und zweiten Achsenbaugruppe aufgrund der ersten Wechselwirkungskräfte der anderen der ersten und zweiten Achsenbaugruppe erzeugt werden; und

eine Korrektureinrichtung zum Berechnen eines Korrektur-Drehmomentes für jede der ersten und zweiten Achsenbaugruppen, basierend auf den ersten Wechselwirkungskräften und den zweiten Wechselwirkungskräften für die erste und zweite Achsenbraugruppe, um es jedem der Arme (1) zu ermöglichen, zu agieren, ohne daß er **durch** die ersten Wechselwirkungskräfte und die zweiten Wechselwirkungskräfte beeinflußt wird, die jeweils auf die erste und zweite Achsenbaugruppe wirken, und wobei die Korrektureinrichtung eine Eingaberichtung zum Addieren des Korrektur-Drehmomentes zu der Steuereingabe jeweiligen der ersten und zweiten Achsenbaugruppe umfaßt.

2. Steuervorrichtung nach Anspruch 1, bei der die Torsionswinkel-Erfassungseinrichtung der ersten und zweiten Achsenbaugruppe den Torsionswinkel ($\theta_s$) der jeweiligen Kupplungen (4) erfassen, basierend auf der Steuereingabe

und dem Motorwinkel ($\theta_m$) jeweils der ersten und zweiten Achsenbaugruppe.

3. Steuervorrichtung nach Anspruch 2, bei der die Torsionswinkel-Erfassungseinrichtung jeder der ersten und zweiten Achsenbaugruppen mit einer Zustandsbeobachtungseinrichtung zum Berechnen von Zustandsgrößen, einschließlich der Torsionswinkel ($\theta_{SL}$, $\theta_{SU}$) einer jeweiligen der ersten und zweiten Achsenbaugruppen, versehen ist.

4. Steuervorrichtung nach Anspruch 1, bei der die Torsionswinkel-Erfassungseinrichtungen der ersten und zweiten Achsenbaugruppe den Torsionswinkel ($\theta_{SL}$, $\theta_{SU}$) der jeweiligen der Kupplungen (4) bestimmt, basierend auf einem Eingangswinkel und einem Ausgangswinkel einer jeweiligen der Verzögerungseinrichtungen, gemäß der Formel

$$\theta_s = \frac{\theta_m}{N} \cdot \theta_1$$

wobei ($\theta_s$) der Torsionswinkel ist, $\theta_m$ der ist und $\theta_l$ der Ausgangswinkel ist, der ein Armwinkel ist.

5. Steuervorrichtung nach einem der obigen Ansprüche, bei der die Korrektureinrichtung einen Korrekturparameter der halb geschlossenen Schleife für sowohl die erste als auch die zweite Achsenbaugruppe berechnet, basierend auf den ersten Wechselwirkungskräften und den zweiten Wechselwirkungskräften für die erste und zweite Achsenbaugruppe, um einen Torsionsbetrag zu kompensieren, der in dem Korrektur-Drehmoment enthalten ist, um es jedem der Arme (1) zu ermöglichen zu agieren, ohne daß er durch die ersten Wechselwirkungskräfte und die zweiten Wechselwirkungskräfte beeinflußt würde, die auf die jeweilige der ersten und zweiten Achsenbaugruppen wirken, und den Korrekturparameter der halb geschlossenen Schleife zu einer Zustandsvariablen der halb geschlossenen Schleife (20, 21) jeder der ersten und zweiten Achsenbaugruppen addiert.

6. Steuervorrichtung nach Anspruch 5, bei der die Zustandsvariable der halb geschlossenen Schleife (20, 21) jeder der ersten und zweiten Achsenbaugruppen ein Motorwinkel ($\theta_m$) ist.

## Revendications

1. Contrôleur pour un robot à axes multiples ayant au moins des premier et second ensembles d'axe, lesdits premier et second ensembles d'axe ayant chacun un bras (1), un servomoteur (3) entraîné par une entrée de commande et un couplage (4) ayant la forme d'un dispositif de ralentissement, qui comporte un élément de ressort, couplant ledit servomoteur (3) et ledit bras (1), ledit second ensemble d'axe étant positionné sur une extrémité dudit bras dudit premier ensemble d'axe, ledit contrôleur comportant :

   - lesdits premier et second ensembles d'axe comportant chacun des moyens de détection d'angle de torsion pour détecter un angle de torsion ($\theta_{SL}$, $\theta_{SU}$) d'un couplage respectif parmi les couplages (4),
   - des moyens de calcul de couplage dynamique pour calculer des paramètres de couplage du couplage dudit servomoteur et dudit bras dans chacun desdits premier et second ensembles d'axe,
   - lesdits premier et second ensembles d'axe comportant chacun une boucle semi-fermée (20, 21) pour effectuer une commande moteur,

   **caractérisé par**

   - un calculateur d'interaction (4) pour calculer des premières forces d'interaction et des secondes forces d'interaction sur la base de valeurs d'entrée de commande ($u_{Lref}$, $u_{Uref}$) pour lesdits servomoteurs (3) de chacun desdits premier et second ensembles d'axe, et desdits angles de torsion ($\theta_{SL}$, $\theta_{SU}$),
     lesdites premières forces d'interaction étant des forces générées sur ledit bras de chacun desdits premier et second ensembles d'axe par déplacement de l'autre ensemble desdits premier et second ensembles d'axe, et
     lesdites secondes forces d'interaction étant générées par une entrée ($u_{LCref}$, $u_{UCref}$), incluse dans des entrées de commande ($u_{Lref}$, $u_{Uref}$) desdits servomoteurs (3), provenant d'une boucle respective parmi lesdites boucles semi-fermées (20, 21) de chacun desdits premier et second ensembles d'axe due aux premières forces d'interaction de l'autre ensemble desdits premier et second ensembles d'axe, et
   - des moyens de correction pour calculer un couple de correction pour chacun desdits premier et second ensembles d'axe, sur la base desdites premières forces d'interaction et desdites secondes forces d'interaction pour lesdits premier et second ensembles d'axe, afin de permettre à chacun desdits bras (1) d'agir sans être affectés par lesdites premières forces d'interaction et lesdites secondes forces d'interaction agissant sur l'ensemble respectif parmi lesdits premier et second ensembles d'axe, et lesdits moyens de correction comportant des moyens d'entrée pour additionner le couple de correction à ladite entrée de commande de l'ensemble respectif parmi lesdits premier et second ensembles d'axe.

2. Contrôleur selon la revendication 1, dans lequel lesdits moyens de détection d'angle de torsion desdits premier et second ensembles d'axe détectent l'angle de torsion ($\theta_s$) du couplage respectif parmi les couplages (4) sur la base de l'entrée de commande et de l'angle de moteur ($\theta_m$) d'un ensemble respectif parmi lesdits premier et second ensembles d'axe.

3. Contrôleur selon la revendication 2, dans lequel lesdits moyens de détection d'angle de torsion de chacun desdits premier et second ensembles d'axe sont munis de moyens d'observation d'état pour calculer des quantités d'état, incluant lesdits angles de torsion ($\theta_{SL}$, $\theta_{SU}$), d'un ensemble respectif parmi lesdits premier et second ensembles d'axe.

4. Contrôleur selon la revendication 1, dans lequel lesdits moyens de détection d'angle de torsion desdits premier et second ensembles d'axe déterminent l'angle de torsion ($\theta_{SL}$, $\theta_{SU}$) du couplage respectif parmi les couplages (4) sur la base d'un angle d'entrée et d'un angle de sortie d'un dispositif de ralentissement respectif parmi lesdits dispositifs de ralentissement conformément à la formule suivante :

$$\theta_s = \frac{\theta_m}{N} - \theta_1$$

où $\theta_s$ est l'angle de torsion, $\theta_m$ est l'angle d'entrée qui est un angle de moteur, N est un rapport de réduction dudit dispositif de ralentissement, et $\theta_1$ est l'angle de sortie qui est un angle de bras.

5. Contrôleur selon l'une quelconque des revendications précédentes, dans lequel lesdits moyens de correction calculent un paramètre de correction de boucle semi-fermée pour chacun desdits premier et second ensembles d'axe, sur la base desdites premières forces d'interaction et desdites secondes forces d'interaction pour lesdits premier et second ensembles d'axe, afin de compenser une quantité de torsion incluse dans ledit couple de correction pour permettre à chacun desdits bras (1) d'agir sans être affectés par lesdites premières forces d'interaction et lesdites secondes forces d'interaction agissant sur l'ensemble respectif parmi lesdits premier et second ensembles d'axe et additionnent ledit paramètre de correction de boucle semi-fermée à une variable d'état de ladite boucle semi-fermée (20, 21) de chacun desdits premier et second ensembles d'axe.

6. Contrôleur selon la revendication 5, dans lequel ladite variable d'état de ladite boucle semi-fermée (20, 21) de chacun desdits premier et second ensembles d'axe est un angle de moteur ($\theta_m$).

# Fig. 1

# Fig. 2

## Fig. 3

| coefficient | two-shaft robot | parallel link two-shaft robot |
|---|---|---|
| $M_{LL}$ | $M_L l_{L_g}{}^2 + M_U l_L{}^2 + M_U l_{U_g}{}^2 + 2l_L \cdot M_U l_{U_g} \cos\theta_{IU}$ | $M_L l_{L_g}{}^2 + M_U l_L{}^2$ |
| $M_{LU}$ | $M_U l_{U_g}{}^2 + l_L \cdot M_U l_{U_g} \cos\theta_{IU}$ | $l_L \cdot M_U l_{U_g} \cos(\theta_{IL} - \theta_{IU})$ |
| $M_{UL}$ | $M_{LU}$ | $M_{LU}$ |
| $M_{UU}$ | $M_U l_{U_g}{}^2$ | $M_U l_{U_g}{}^2$ |

## Fig. 4

reduction gear 4
(reduction+spring)

arm 1

motor 3

load 2

Fig. 5

# Fig. 6

# Fig. 7

# Fig. 8

speed(rad/sec)

time (sec)

Fig. 9

Fig. 10